(19) Europäisches Patentamt
European Patent Office
Office européen des brevets

(11) **EP 1 595 073 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(21) Anmeldenummer: **03795729.7**

(22) Anmeldetag: **05.11.2003**

(51) Int Cl.:
*F02M 61/16* (2006.01)   *F02D 41/20* (2006.01)
*F02D 41/22* (2006.01)   *F02D 41/14* (2006.01)

(86) Internationale Anmeldenummer:
**PCT/DE2003/003660**

(87) Internationale Veröffentlichungsnummer:
**WO 2004/070195 (19.08.2004 Gazette 2004/34)**

(54) **VERFAHREN ZUM BETREIBEN EINES EINSPRITZVENTILS EINER BRENNKRAFTMASCHINE**

METHOD FOR OPERATING AN INJECTION VALVE OF AN INTERNAL COMBUSTION ENGINE

PROCEDE POUR FAIRE FONCTIONNER UNE SOUPAPE D'INJECTION D'UN MOTEUR A COMBUSTION INTERNE

(84) Benannte Vertragsstaaten:
**DE ES FR**

(30) Priorität: **08.02.2003 DE 10305178**

(43) Veröffentlichungstag der Anmeldung:
**16.11.2005 Patentblatt 2005/46**

(73) Patentinhaber: **ROBERT BOSCH GMBH**
**70442 Stuttgart (DE)**

(72) Erfinder:
• **PANTRING, Juergen**
**71701 Schwieberdingen (DE)**
• **JOOS, Klaus**
**74399 Walheim (DE)**

(56) Entgegenhaltungen:
EP-A- 0 860 600    EP-A- 1 118 761
EP-A- 1 205 657    DE-A- 10 123 218
DE-A- 19 626 690    FR-A- 2 762 358

• PATENT ABSTRACTS OF JAPAN Bd. 1999, Nr. 04, 30. April 1999 (1999-04-30) & JP 11 013502 A (TOYOTA MOTOR CORP), 19. Januar 1999 (1999-01-19)

**Beschreibung**

Die Erfindung betrifft ein Verfahren zum Betreiben eines Einspritzventils einer Brennkraftmaschine, wobei die Dosierung der Kraftstoffmenge insbesondere durch eine Variation des Hubs der Düsennadel des Einspritzventils einstellbar ist. Die Erfindung betrifft darüber hinaus ein Computerprogramm und ein Steuergerät zur Durchführung des Verfahrens sowie eine Brennkraftmaschine mit einem derartigen Steuergerät.

Stand der Technik

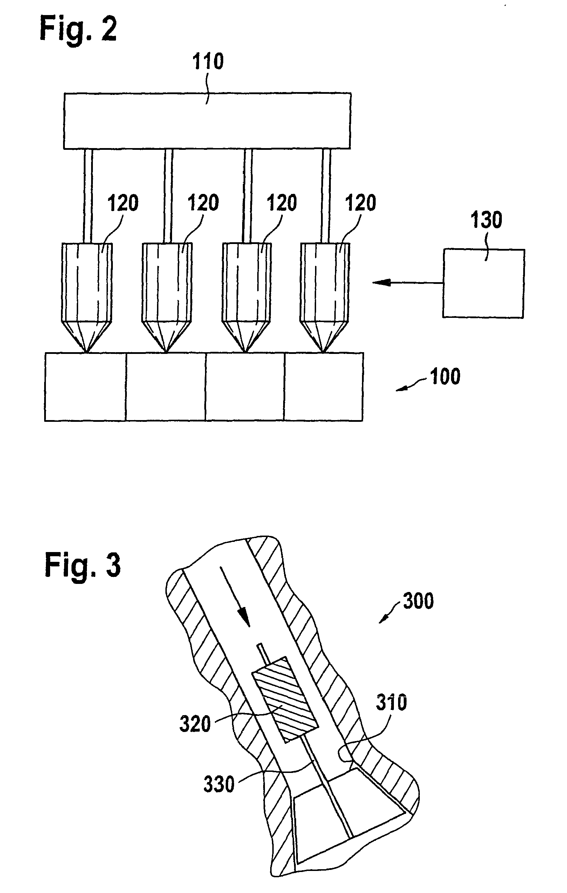

Im Stand der Technik DE 10123218A1, sind Hochdruckeinspritzventile für eine Kraftstoffdirekteinspritzung bei Brennkraftmaschinen grundsätzlich bekannt. FR 2762358 A offenbart ein Einspritzsystem, welches bei Erkennen eines leckenden Einspritzventils dieses voll öffnet, um den stromaufwärts des Einspritzventils vorhandenen Durchflußbegrenzer zu aktivieren, sodaß die Kraftstoffzufuhr zum leckenden Einspritzventil unterbrochen wird. Es sind insbesondere auch solche Hochdruckeinspritzventile 300 wie in Figur 3 gezeigt bekannt, bei denen die Dosierung der in die Brennkammern der Brennkraftmaschine einzuspritzenden Kraftstoffmenge nicht nur über die Öffnungsdauer des Ventils, sondern insbesondere auch durch eine Variation des Hubs der Düsennadel 330 möglich ist. Bei diesen Ventilen wird die Düsennadel 330 zum Beispiel direkt mit Hilfe eines Piezo-Aktuators 320 angesteuert. Derartige Ventile eignen sich insbesondere zum Absetzen sehr kurzer Einspritzimpulse und zum Absetzen von mehreren Einspritzimpulsen während eines Arbeitszyklusses, sogenannte Mehrfacheinspritzung, innerhalb eines sehr kurzen Zeitfensters. Ein Beispiel für eine bei einem derartigen Ventil verwendete Düse ist die nach außen öffnende Düse, die sogenannte A-Düse.

Im Stand der Technik ist der Nadelhub bei den beschriebenen Einspritzventilen, die eine Variation des Düsennadelhubs gestatten, sowohl zu großen wie auch zu kleinen Werten hin für den Ventilhub durch diverse Einschränkungen begrenzt:

So wird der Nadelhub zu großen Werten hin begrenzt durch

- die Möglichkeiten zur Realisierung einer geforderten kleinen Menge, weil die Düsenfläche und der Kraftstoffsystemdruck durch das verwendete Brennverfahren vorgegeben beziehungsweise nur begrenzt variabel sind;
- die Größe der einsetzbaren Piezoaktoren 320 und deren physikalische Eigenschaften wie zum Beispiel deren Hubvermögen, die von ihnen aufzubringenden Kräfte und ihr Beschleunigungsvermögen, et cetera; und durch
- die Leistungsfähigkeit der Steuergeräteendstufe (Verlustleistung, Bauraum).

Demgegenüber wird der Nadelhub für einen Nennbetrieb der Brennkraftmaschine, das heißt der Nennnadelhub zu kleinen Hubwerten hin, das heißt in Form eines Mindestnadelhubs, begrenzt durch

- die Gewährleistung einer ausreichenden Spülwirkung.

Durch diesen Mindestnadelhub soll sichergestellt werden, dass es bei einem Nennbetrieb der Brennkraftmaschine, bei dem das Einspritzventil überwiegend mit dem Nennhub betrieben wird, nicht zu einem unvollständig schließenden beziehungsweise offen klemmenden Ventil durch Partikel in dem Querschnitt der Einspritzdüse kommt.

Die Gewährleistung einer ausreichenden Spülwirkung ist deswegen besonders wichtig, um die Gefahr eines Benzinschlags zu vermeiden. Ein Benzinschlag entsteht dann, wenn der Querschnitt des Einspritzventils durch Schmutzpartikel blockiert ist, so dass das Einspritzventil nicht mehr vollständig geschlossen werden kann. Es kommt dann zu einer kontinuierlichen Förderung von Kraftstoff in den Zylinder, dessen Einspritzventil eingeklemmt ist. Da Kraftstoff als inkompressibles Medium angesehen werden kann, kommt es zu einer Behinderung oder Blockierung der Kolbenbewegung, wenn die eingespritzte Kraftstoffmenge das Kompressionsvolumen des Zylinders übersteigt. Wenn gleichzeitig jedoch andere Zylinder der Brennkraftmaschine ordnungsgemäß arbeiten, werden von diesen über die Kurbelwelle sehr große Kräfte auf das Pleuel und den Kolben des blockierten Zylinders ausgeübt, was in der Regel zu irreparablen Motorschäden in Form insbesondere eines Bruchs des Pleuels und einer Beschädigung des Zylinders führt.

Wie oben ausgeführt, wird durch die Vorgabe des Mindestnadelhubs im Nennbetrieb der Brennkraftmaschine eine Verschmutzung der Düse durch Schmutzpartikel vermieden.

Diese Vorgabe des Mindestnadelhubs gilt jedoch nur für den Nennbetrieb der Brennkraftmaschine. Sie schließt nicht aus, dass zwischen einzelnen Einspritzimpulsen bzw. Hüben der Düsennadel das Einspritzventil auch zeitweise vollständig geschlossen sein muss. Dies gilt insbesondere für Betriebszustände mit geringem Kraftstoffbedarf, wie zum Beispiel im Leerlauf, wenn über längere Zeitintervalle hinweg die Düsennadel nicht mit Vollhüben wie im Nennbetrieb, sondern lediglich mit Teilhüben angesteuert wird. Bei diesen Betriebszuständen der Brennkraftmaschine ist dann eine ausreichende Spülwirkung aufgrund der nur Teilhubansteuerung nicht mehr gewährleistet, was die Gefahr einer Verschmutzung der Einspritzdüse stark erhöht und deren Erkennung erschwert.

Insbesondere im Leerlaufbetrieb kann auch ein großer zeitlicher Abstand zwischen zwei Einspritzzyklen eines Zylinders liegen. Dies hat zur Folge, dass für die Diagnose des unerwünschten offen klemmenden Betriebszustandes der Düsennadel nur relativ wenige Einspritzereignisse zur Verfügung stehen, was die Diagnose dieses Betriebszustandes insgesamt unsicherer macht.

Ausgehend von diesem Stand der Technik ist es die Aufgabe der Erfindung, bekannte Verfahren zum Betrieb eines Einspritzventils einer Brennkraftmaschine, bekannte Computerprogramme und Steuergeräte zur Durchführung dieses Verfahrens sowie bekannte Brennkraftmaschinen mit einem derartigen Steuergerät derart weiterzubilden, dass eine Verschmutzung der Düse des Einspritzventils durch Partikel und eine damit verbundene Gefahr eines Benzinschlags insbesondere auch in Betriebszuständen mit geringem Kraftstoffverbrauch leichter erkannt und vermieden wird.

Diese Aufgabe wird durch den Gegenstand des Patentanspruchs 1 gelöst. Demnach besteht die Lösung insbesondere darin, dass ein Verfahren zum Betreiben eines Einspritzventils einer Brennkraftmaschine, bei dem die Dosierung der Kraftstoffmenge neben der Variation der Einspritzzeit auch durch eine Variation des Hubs der Düsennadel des

Einspritzventils einstellbar ist, die folgenden Schritte umfasst:

a) Überwachen der Brennkraftmaschine auf ordnungsgemäße Funktionsweise;

b) Erkennen eines offen klemmenden Betriebszustandes der Düsennadel des Einspritzventils, insbesondere aufgrund einer Verschmutzung, wobei die Düse des Einspritzventils durch die Düsennadel zwar nicht mehr weiter verschließbar, wohl aber noch weiter zu öffnen ist; und

c) Spülen der Düse mit Kraftstoff durch Einstellen eines im Wesentlichen maximalen Hubs der Düsennadel zum Beseitigen der Verschmutzung.

Vorteile der Erfindung

Vorteilhafterweise werden durch die bei einer derartigen Spülung wirkende große Kraftstoffmenge und den dann wirkenden großen Druck Schmutzpartikel im Querschnitt des Einspritzventils weggespült. Die Düse ist dann wieder frei von Schmutzpartikeln und kann wieder vollständig geschlossen werden. Der Gefahr eines Benzinschlags wird damit entgegengewirkt. Durch die Spülung der Düse wird außerdem das ursprüngliche Strahlbild der Düse wieder hergestellt, wenn es zuvor durch die Schmutzpartikel beeinträchtigt war. Die Wiederherstellung des Strahlbildes führt zu einer Verbesserung des Wirkungsgrades der Brennkraftmaschine.

Beispielhafte Ausführungen für das Überwachen der Brennkraftmaschine auf ordnungsgemäße Funktionsweise und das Erkennen des offen klemmenden Betriebszustandes der Düsennadel sind Gegenstand der Unteransprüche 2 - 4. Wichtig ist, dass die in diesen Ansprüchen vorgeschlagenen Ausführungsformen auch gleichzeitig durchgeführt werden können. Für das Erkennen eines offen klemmenden Betriebszustandes ist es dann ausreichend, wenn eine der in den Ansprüchen 2 - 4 für das Erkennen genannten Bedingungen erfüllt ist.

Es ist vorteilhaft, dass die bei Vollhub im Rahmen einer Spülung geförderte erhöhte Kraftstoffmenge durch eine Verringerung der Ansteuerdauer ti kompensiert werden kann.

Wenn das Ventil in einer offenen Stellung klemmt, fließt kontinuierlich Kraftstoff in die Brennkammern der Brennkraftmaschine. Dies hat ein unerwünschtes großes Motordrehmoment zur Folge. Vorteilhafte Abhilfen für das Auftreten dieses unerwünschten Mehrmomentes sind Gegenstand der Unteransprüche 6 - 8.

Für den Abbau von Kraftstoffmehrmengen und um Fehlauslösungen einer Spülung gemäß Schritt c) zu vermeiden, ist es vorteilhaft, wenn die Durchführung des Schrittes c) für eine vorbestimmte Zeitdauer gesperrt ist, bevor er wieder erneut freigegeben wird.

Die oben genannte Aufgabe wird weiterhin durch ein Computerprogramm und ein Steuergerät zur Durchführung des Verfahrens sowie durch eine Brennkraftmaschine mit einem derartigen Steuergerät gelöst. Die Vorteile für diese Lösungen entsprechen den oben mit Bezug auf das erfindungsgemäße Verfahren beschriebenen Vorteilen.

Zeichnungen

Die Erfindung wird nachfolgend in Form von verschiedenen Ausführungsbeispielen detailliert und unter Bezugnahme auf die der Beschreibung beigefügten drei Figuren näher beschrieben, wobei

Figur 1    das Verfahren zum Betreiben eines Einspritzventils einer Brennkraftmaschine gemäß der Erfindung;

Figur 2    eine Brennkraftmaschine mit zugeordneter Ventileinspritzung gemäß der Erfindung; und

Figur 3    ein Einspritzventil mit Variation des Hubs der Düsennadel gemäß dem Stand der Technik

zeigt.

Beschreibung von Ausführungsbeispielen der Erfindung

Das Verfahren gemäß der Erfindung dient dazu, insbesondere während Betriebszuständen mit nur geringem Kraftstoffbedarf, wie zum Beispiel dem Leerlauf, eine Verschmutzung der Düse 310 des Einspritzventils 300 zu vermeiden.

Für diesen Zweck sieht das Verfahren gemäß einem Schritt Sa) eine Überwachung der Brennkraftmaschine auf ordnungsgemäße Funktionsweise hin vor. Diese Überwachung kann erfindungsgemäß auf viererlei Weise erfolgen.

Zum einen kann diese Überwachung darin bestehen, dass das Luft-Kraftstoffgemisch der Brennkraftmaschine auf eine Anfettung hin überwacht wird, siehe Verfahrensschritt Sa1. Eine Anfettung des Kraftstoffgemisches wird typischerweise durch eine Reduktion des Lambda-Wertes bei dem betreffenden Zylinder festgestellt.

Eine zweite Möglichkeit der Überwachung der Brennkraftmaschine besteht darin, sie oder einzelne ihrer Zylinder auf Aussetzer hin zu überwachen, wie dies in Verfahrensschritt Sa2 vorgeschlagen wird. Dabei wird unter Aussetzer das Aussetzen einer Verbrennung während eines Zündzyklusses verstanden.

Drittens kann die Überwachung der ordnungsgemäßen Funktionsweise der Brennkraftmaschine auch durch eine Überwachung des Druckes in einem der Brennkraftmaschine zugeordneten Kraftstoffspeicher 110 erfolgen. Wenn dieser Druck abfällt, ist ein ordnungsgemäßer Betrieb der Brennkraftmaschine gefährdet (Sa3).

Schließlich besteht eine vierte Überwachungsmöglichkeit darin, einzelne Zylinder der Brennkraftmaschine auf Drehmomenterhöhungen oder auf Drehmomentungleichförmigkeiten hin zu beobachten (Verfahrensschritt Sa4).

Alle vier genannten Überwachungsmöglichkeiten gemäß der Verfahrensschritte Sa1, Sa2, Sa3 und Sa4 können entweder nur alleine oder aber in beliebiger Kombination durchgeführt werden. In Anspielung auf die möglichen Kombinationen weisen einige Ansprüche die Formulierungen: "- gegebenenfalls zusätzlich -" und "- gegebenenfalls auch -" auf.

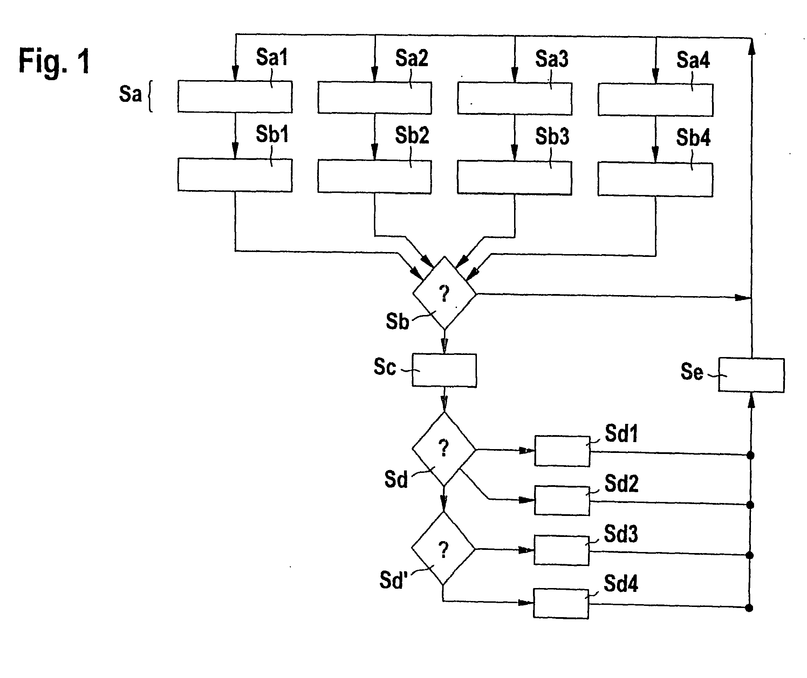

Die Überwachung der Brennkraftmaschine macht im Rahmen des erfindungsgemäßen Verfahrens nur dann Sinn, wenn die bei der Überwachung gewonnenen Erkenntnisse auch im Hinblick auf einen unerwünschten und zu erkennenden offen klemmenden Betriebszustand der Düsennadel 330 des Einspritzventils 300 ausgewertet werden. Diese Auswertung richtet sich, wie in Figur 1 dargestellt, nach der zuvor in Schritt Sa) durchgeführten Überwachung der Brennkraftmaschine. So wird gemäß einem Verfahrensschritt Sb1 für den Fall, dass das Kraftstoffgemisch der Brennkraftmaschine gemäß Verfahrensschritt Sa1 auf eine Anfettung hin untersucht wurde, ein offen klemmender Betriebszustand der Düsennadel dann festgestellt, wenn die Anfettung des Kraftstoffgemisches größer als ein vorgebbarer Anfettungsschwellenwert ist oder wenn der Gradient der Anfettung größer als ein vorgebbarer Anfettungsgradientenschwellenwert ist. Gleichermaßen wird bei Überwachung der Brennkraftmaschine gemäß Verfahrensschritt Sa2 auf Aussetzer hin ein offen klemmender Betriebszustand der Düsennadel gemäß Verfahrensschritt Sb2 dann erkannt, wenn die Anzahl der festgestellten Aussetzer eines Zylinders pro Zeiteinheit einen vorgegebenen Häufigkeitsschwellenwert übersteigt. Bei Überwachung der Brennkraftmaschine gemäß Verfahrensschritt Sa3 wird auf einen Druckabfall im Kraftstoffspeicher 110 hin ein offen klemmender Betriebszustand der Düsennadel 330 gemäß Verfahrensschritt Sb3 dann erkannt, wenn der Druck in dem Kraftstoffspeicher 110 unter einen vorgebbaren Druckschwellenwert sinkt oder wenn der zeitliche Verlauf des Druckes in dem Kraftstoffspeicher 110 um mehr als vorgebbare Drucktoleranzwerte von einem vorgebbaren Solldruckverlauf abweicht. Schließlich lassen, bei einer Überwachung der Brennkraftmaschine gemäß Verfahrensschritt Sa4, bei Schichtbetrieb festgestellte Drehmomenterhöhungen oder -ungleichförmigkeiten auf ein nicht vollständig schließendes Ventil, das heißt auf einen offen klemmenden Betriebszustand der Düsennadel 330 schließen, wenn die festgestellten Drehmomenterhöhungen oder - ungleichförmigkeiten einen vorgegebenen Schwellenwert überschreiten.

In Verfahrensschritt Sb gemäß Figur 1 wird dann überprüft, ob zumindest gemäß einem der Verfahrensschritte Sb1, Sb2, Sb3 oder Sb4 ein offen klemmender Betriebszustand der Düsennadel 330 erkannt wird. Wenn dem nicht so ist, wird die Überwachung gemäß Verfahrensschritt Sa) fortgesetzt. Wenn jedoch ein offen klemmender Betriebszustand der Düsennadel 330 erkannt wird, das heißt wenn festgestellt wird, dass diese nicht mehr weiter verschließbar, wohl aber noch weiter zu öffnen ist, lässt dies auf eine Verschmutzung der Düse 310 durch Partikel schließen. Dieser Rückschluss ist insbesondere dann zulässig, wenn dieser offen klemmende Betriebszustand nicht regelmäßig, sondern nur sehr temporär auftritt; dann kann eine unsauber gefertigte Oberfläche 310 der Düse als Ursache für den offen klemmenden Betriebszustand ausgeschlossen werden.

Für den Fall, dass in Verfahrensschritt Sb) eine Verschmutzung des Querschnitts der Düse 310 erkannt worden ist, sieht das erfindungsgemäße Verfahren vor, gemäß Verfahrensschritt Sc eine Spülung der Düse 310 mit Kraftstoff durchzuführen, wobei der Hub der Düsennadel 330 auf einen im Wesentlichen maximalen Wert eingestellt wird. Es fließt dann eine besonders große Kraftstoffmenge mit großem Druck durch die Düse des Einspritzventils, wodurch die unerwünschten Schmutzpartikel weggeschwemmt werden. Die Düse ist dann wieder frei von Schmutzpartikeln und lässt sich wieder ordnungsgemäß schließen, was dann in einer ordnungsgemäßen Funktionsweise der Brennkraftmaschine resultiert.

Aufgrund der Einstellung des maximalen Hubs der Düsennadel während des Spülvorganges in Verfahrensschritt Sc) (Spülhub) wird eine besonders große Kraftstoffmenge in die Brennkammer der Brennkraftmaschine 100 eingespeist. Diese Kraftstoffmenge kann durchaus wesentlich größer sein als eine Nennkraftstoffmenge, wie sie im Nennbetrieb der Brennkraftmaschine benötigt wird. Diese Mehrmenge an Kraftstoff hat unter Umständen ein erhöhtes Drehmoment der Brennkraftmaschine zur Folge. Wenn dieses erhöhte Drehmoment nicht erwünscht ist, empfiehlt das erfindungsgemäße Verfahren gemäß Figur 1 verschiedene Maßnahmen, um dem Auftreten dieses erhöhten Drehmomentes entgegenzuwirken.

Dafür muss zunächst in Verfahrensschritt Sd) festgestellt werden, ob überhaupt ein erhöhtes Drehmoment vorliegt. Wenn dem so ist, besteht gemäß Verfahrensschritt Sd1) eine erste Möglichkeit, das Drehmoment der Brennkraftmaschine konstant zu halten, darin, während der Durchführung der Spülung gemäß Verfahrensschritt Sc) die Ansteuerdauer ti, während derer der maximale Düsennadelhub eingestellt ist, so weit zu verringern, dass die durch das Einspritzventil in die Brennkammer der Brennkraftmaschine 100 eingespritzte Kraftstoffmenge einen vorgegebenen Kraftstoffmittelwert nicht überschreitet. Alternativ dazu besteht eine zweite Möglichkeit, das Drehmoment der Brennkraftmaschine konstant zu halten, gemäß einem Verfahrensschritt Sd2) darin, dass während der Durchführung der Spülung gemäß Verfahrensschritt c) künstlich ein Aussetzer bei der Zündung desjenigen Zylinders erzeugt wird, bei dem der unerwünschte offen klemmende Betriebszustand der Düsennadel 330 festgestellt wurde. Dieser Aussetzer kann künstlich dadurch erzeugt werden, dass der Zündzeitpunkt so lange hinausgezögert wird, bis das Luft-Kraftstoff-Gemisch nicht mehr entflammbar ist beziehungsweise der Hochdruckwirkungsgrad der Verbrennung minimal ist.

Zwei weitere Maßnahmen, um das Drehmoment der Brennkraftmaschine konstant zu halten, hängen von der Betriebsart der Brennkraftmaschine ab.

Wenn in einem Verfahrensschritt Sd') festgestellt wird, dass die Brennkraftmaschine 100 in einem sogenannten Homogenbetrieb arbeitet, das heißt, dass es zu geringen Drehmomenterhöhungen entsprechend der Lambda-Wirkungsgradkurve kommt, besteht die Möglichkeit, das Drehmoment der Brennkraftmaschine dadurch konstant zu halten, dass während der Spülung die Zündzeitpunkte so weit verzögert werden, dass der Zündwinkelwirkungsgrad gemäß folgender Formel angepasst wird (Verfahrensschritt Sd3):

$$\text{eta\_zw} = (\text{Md\_soll} / \text{Mi\_opt}) \cdot (1/\text{eta\_lam}),$$

mit

$$\text{eta\_lam} = f(\text{lambda}), \quad \text{lambda} = \text{rl} / \text{rk\_soll};$$

und

$$\text{rk\_soll} = f(\text{Spülhub})$$

wobei

eta_zw      den Zündwinkelwirkungsgrad;

Md_soll      den Sollwert für das Motordrehmoment bzw. für die Brennkraftmaschine (100);

Mi_opt      das optimale Motordrehmoment beziehungsweise optimale Drehmoment der Brennkraftmaschine (100);

eta_lam      den $\lambda$-Wirkungsgrad;

rl      die Luftmasse; und

rk_soll      den Sollwert für die Kraftstoffmasse

repräsentiert.

Wird jedoch in Verfahrensschritt Sd' festgestellt, dass die Brennkraftmaschine 100 in einem sogenannten Schichtbetrieb betrieben wird, dann bedeutet dies, dass generell ein Luftüberschuss besteht. Dies hat zur Folge, dass geringe bis große Drehmomenterhöhungen je nach aktuellem Betriebspunkt auf der Lambda-Wirkungskurve erzeugt werden, vorausgesetzt, dass das Gemisch entflammbar ist. Im Fall des Schichtbetriebes lässt sich das Drehmoment dadurch konstant halten, dass vor oder nach der Spülung gemäß Verfahrensschritt Sc) zumindest einzelne Einspritzimpulse, die normalerweise während eines Mehrfacheinspritzzyklusses vorgesehen sind, nicht mehr durchgeführt werden.

Wird die Brennkraftmaschine im Schichtbetrieb betrieben und wird ein offen klemmendes Einspritzventil erkannt, so sollte in den Homogenbetrieb gewechselt werden, da in diesem eine Drehmomentbegrenzung durch Begrenzung der zugeführten Luftmasse erfolgen kann.

Alle gemäß der Verfahrensschritte Sd1), Sd2), Sd3) und Sd4) aufgezeigten Ansätze bewirken eine Begrenzung der den Brennkammern der Brennkraftmaschine 100 zugeführten Kraftstoffmenge, obwohl das Einspritzventil bei Betrieb mit Spülhub maximal geöffnet ist.

Unabhängig davon, welche Variante zur Konstanthaltung.des Drehmomentes verwendet wird, empfiehlt es sich, nach einer durchgeführten Spülung eine Pause von vorbestimmter Zeitdauer einzulegen, bevor eine erneute Spülung durchgeführt werden kann; siehe Schritt Se). Auf diese Weise werden Fehlauslösungen des erfindungsgemäßen Verfahrens und insbesondere der Spülung gemäß Schritt Sc) vermieden.

**Patentansprüche**

1. Verfahren zum Betrieb eines Einspritzventils einer Brennkraftmaschine (100), wobei die Dosierung der Kraftstoffmenge neben einer Variation der Einspritzzeit auch durch eine Variation des Hubs der Düsennadel des Einspritzventils (120) einstellbar ist, umfassend die folgenden Schritte:

   a) Überwachen der Brennkraftmaschine (100) auf ordnungsgemäße Funktionsweise (Sa);
   b) Erkennen eines offenen klemmenden Betriebszustandes der Düsennadel des Einspritzventils (120), insbesondere aufgrund einer Verschmutzung, wobei die Düse des Einspritzventils (120) durch die Düsennadel zwar nicht mehr weiter verschließbar, wohl aber noch weiter zu öffnen ist (Sb); und
   c) Durchführen einer Spülung der Düse mit Kraftstoff durch Einstellen eines im Wesentlichen maximalen Hubes der Düsennadel zum Beseitigen der Verschmutzung (Sc).

2. Verfahren nach Anspruch 1, **dadurch gekennzeichnet, dass** in Schritt a) die Brennkraftmaschine (100) auf eine Anfettung hin überwacht wird (Sa1) und dass in Schritt b) der offen klemmende Betriebszustand dann erkannt wird, wenn die Anfettung größer als ein vorgebbarer Anfettungsschwellenwert oder der Gradient der Anfettung größer als ein vorgebbarer Anfettungsgradientenschwellenwert ist (Sb1)

3. Verfahren nach Anspruch 1 oder 2, **dadurch gekennzeichnet, dass** in Schritt a) - gegebenenfalls zusätzlich - die Brennkraftmaschine (100) oder ein einzelner Zylinder der Brennkraftmaschine (100) auf Aussetzer hin überwacht wird (Sa2) und dass in Schritt b) der offen klemmende Betriebszustand - gegebenenfalls auch - dann erkannt wird, wenn die Anzahl der festgestellten Aussetzer eines Zylinders pro Zeiteinheit einen vorgegebenen Häufigkeitsschwellenwert übersteigt (Sb2).

4. Verfahren nach Anspruch 1 oder 2 oder 3, **dadurch gekennzeichnet, dass** in Schritt a) - gegebenenfalls zusätzlich - der Druck in einem der Brennkraftmaschine (100) zugeordneten Kraftstoffspeicher (110) überwacht wird (Sa3) und dass in Schritt b) der offen klemmende Betriebszustand - gegebenenfalls auch - dann erkannt wird, wenn der Druck in dem Kraftstoffspeicher (110) unter einen vorgebbaren Druckschwellenwert sinkt oder wenn der zeitliche Verlauf des Druckes in dem Kraftstoffspeicher (110) um mehr als vorgebbare Drucktoleranzwerte von einem vorgebbaren Solldruckverlauf abweicht (Sb3).

5. Verfahren nach einem der vorangegangenen Ansprüche, **dadurch gekennzeichnet, dass** während der Durchführung der Spülung gemäß Schritt c) die Ansteuerdauer ti, während derer der maximale Düsennadelhub eingestellt ist, so weit verringert wird, dass die durch das Einspritzventil (120) in die Brennkammer der Brennkraftmaschine (100) eingespritzte Kraftstoffmenge einen vorgegebenen Kraftstoffmittelwert nicht überschreitet (Sd1).

6. Verfahren nach einem der Ansprüche 1 - 4, **dadurch gekennzeichnet, dass** während der Durchführung der Spülung gemäß Schritt c) künstlich ein Aussetzer der Verbrennung bei demjenigen Zylinder erzeugt wird, bei dem der offen klemmende Betriebszustand der Düsennadel festgestellt wurde, indem der Zündzeitpunkt für diesen Zylinder so lange hinausgezögert wird, bis das Luft-Kraftstoffgemisch in der Brennkammer nicht mehr entflammbar bzw. der Hochdruckwirkungsgrad der Verbrennung minimal ist (Sd2).

7. Verfahren nach einem der Ansprüche 1 - 4, **dadurch gekennzeichnet, dass** - wenn die Brennkraftmaschine (100) in einem Homogenbetrieb arbeitet - während der Spülung gemäß Schritt c) die Zündzeitpunkte so weit verzögert werden, dass der Zündwinkelwirkungsgrad gemäß folgender Formel angepasst wird (Sd3):

$$\texttt{eta\_zw = (Md\_soll / Mi\_opt) . (1/eta\_lam),}$$

$$\texttt{eta\_lam = f(lambda), lambda = rl / rk\_soll;}$$

und

$$\texttt{rk\_soll = f(Spülhub)}$$

wobei

eta_zw den Zündwinkelwirkungsgrad;
Md_soll den Sollwert für das Motordrehmoment bzw. für die Brennkraftmaschine (100);
Mi_opt das optimale Motordrehmoment beziehungsweise optimale Drehmoment der Brennkraftmaschine (100);
eta_lam den $\lambda$-Wirkungsgrad;
rl die Luftmasse; und
rk_soll den Sollwert für die Kraftstoffmasse

repräsentiert.

8. Verfahren nach einem der Ansprüche 1 - 4, **dadurch gekennzeichnet, dass** - wenn die Brennkraftmaschine (100) im Schichtbetrieb arbeitet - vor oder nach der Spülung gemäß Schritt c) zumindest einzelne von grundsätzlich mehreren während desselben Mehrfach-Einspritzzyklusses vorgesehenen Einspritzmengen nicht mehr durchgeführt werden (Sd4).

9. Verfahren nach einem der Ansprüche 1 - 8, **dadurch gekennzeichnet, dass** der maximale Hub der Düsennadel gemäß Schritt c) nur für jeweils einen Zylinder der Brennkraftmaschine (100) und auch nur für wenige Einspritzvorgänge eingestellt wird.

10. Verfahren nach Anspruch 9, **dadurch gekennzeichnet, dass** die Durchführung des Schrittes c) für eine vorbestimmbare Zeitdauer gesperrt wird, bevor er wieder erneut freigeschaltet wird (Se).

11. Computerprogramm für ein Steuergerät (130) einer Brennkraftmaschine (100) mit Programmcode, das Verfahren nach einem der Ansprüche 1 - 10 durchführt, wenn er auf einem Computer oder Mikroprozessor abläuft.

12. Computerprogramm nach Anspruch 11, **dadurch gekennzeichnet, dass** der Programmcode auf einem computerlesbaren Datenträger gespeichert ist.

13. Steuergerät (130) zur Ansteuerung eines Einspritzventils (120) einer Brennkraftmaschine (100), wobei das Einspritzventil (120) so ausgebildet ist, dass eine Dosierung der von ihm zugeführten Kraftstoffmenge in die Brennkammern der Brennkraftmaschine (100) neben einer Variation der Einspritz zeit auch durch eine Variation des Hubs der Düsennadel des Einspritzventils (120) möglich ist, **dadurch gekennzeichnet, dass** mit Hilfe des Steuergerätes (130) die ordnungsgemäße Funktionsweise der Brennkraftmaschine (100) überwacht und ein offener klemmender Betriebszustand der Düsennadel des Einspritzventils (120), insbesondere aufgrund einer Verschmutzung der Düse, erkennbar ist, wobei die Düse des Einspritzventils (120) durch die Düsennadel zwar nicht mehr verschließbar, wohl aber noch weiter zu öffnen ist, und in diesem Fall ein im Wesentlichen maximaler Hub der Düsennadel durch das Steuergerät (130) einstellbar ist zum Spülen der Düse mit Kraftstoff zum Beseitigen der Verschmutzung.

14. Brennkraftmaschine (100) mit einem Einspritzventil (120) zur Kraftstoffeinspritzung, wobei das Einspritzventil (120) so ausgebildet ist, dass es eine Dosierung der von ihm in die Brennkammern der Brennkraftmaschine (100) zugeführten Kraftstoffmenge neben einer Variation der Einspritz zeit auch durch eine Variation des Hubs der Düsennadel des Einspritzventils (120) ermöglicht, **dadurch gekennzeichnet, dass** der Brennkraftmaschine (100) ein Steuergerät (130) zugeordnet ist, welches die Brennkraftmaschine (100) auf ordnungsgemäße Funktionsweise überwacht und mit dessen Hilfe ein offener klemmender Betriebszustand der Düsennadel des Einspritzventils (120), insbesondere aufgrund einer Verschmutzung, erkennbar ist, wobei die Düse des Einspritzventils (120) durch die Düsennadel zwar nicht mehr verschließbar, wohl aber noch weiter zu öffnen ist, und mit dessen Hilfe in diesem Fall ein im Wesentlichen maximaler Hub der Düsennadel zum Spülen der Düse mit Kraftstoff zum Beseitigen der Verschmutzung einstellbar ist.

## Claims

1. Method for operating an injection valve of an internal combustion engine (100), it being possible for the dosing of the fuel quantity to be adjusted not only by means of a variation of the injection time but also by means of a variation of the stroke of the nozzle needle of the injection valve (120), comprising the following steps:

   a) monitoring the internal combustion engine (100) with regard to correct functioning (Sa);
   b) identifying a sticking-open operating state of the nozzle needle of the injection valve (120), in particular on account of contamination, in which the nozzle of the injection valve (120) can be closed no further but can still be opened further by the nozzle needle (Sb); and
   c) carrying out a flushing of the nozzle with fuel by setting a substantially maximum stroke of the nozzle needle in order to eliminate the contamination (Sc).

2. Method according to Claim 1, **characterized in that**, in step a), the internal combustion engine (100) is monitored with regard to an enrichment (Sa1) and **in that**, in step b), the sticking-open operating state is identified if the enrichment is greater than a predefinable enrichment threshold or the gradient of the enrichment is greater than a predefinable enrichment gradient threshold (Sb1).

3. Method according to Claim 1 or 2, **characterized in that**, in step a) - if appropriate additionally - the internal combustion engine (100) or an individual cylinder of the internal combustion engine (100) is monitored with regard to misfires (Sa2) and **in that**, in step b), the sticking-open operating state is - if appropriate also - identified if the number of detected misfires of a cylinder per unit time exceeds a predefined frequency threshold (Sb2).

4. Method according to Claim 1 or 2 or 3, **characterized in that**, in step a) - if appropriate additionally - the pressure in a fuel store (110) assigned to the internal combustion engine (100) is monitored (Sa3) and **in that**, in step b), the sticking-open operating state is - if appropriate also - identified if the pressure in the fuel store (110) falls below a predefinable pressure threshold or if the temporal profile of the pressure in the fuel store (110) deviates from a predefinable nominal pressure profile by more than predefinable pressure tolerance values (Sb3).

5. Method according to one of the preceding claims, **characterized in that**, as the flushing according to step c) is being carried out, the actuation period ti during which the maximum nozzle needle stroke is set is reduced to such an extent that the fuel quantity injected through the injection valve (120) into the combustion chamber of the internal combustion engine (100) does not exceed a predefined average fuel value (Sd1).

6. Method according to one of Claims 1-4, **characterized in that**, as the flushing according to step c) is being carried out, a misfire of the combustion is artificially generated **in that** cylinder in which the sticking-open operating state of the nozzle needle has been identified, by virtue of the ignition time for said cylinder being retarded until the air/fuel mixture in the combustion chamber is no longer ignitable or the high-pressure efficiency of the combustion is at a minimum (Sd2).

7. Method according to one of Claims 1-4, **characterized in that** - if the internal combustion engine (100) is operating in a homogeneous mode - as the flushing according to step c) is being carried out, the ignition times are retarded to such an extent that the ignition angle efficiency is adapted according to the following formula (Sd3):

$$eta\_zw = (Md\_nom \ / \ Mi\_opt) \ . \ (1/eta\_lam),$$

$$eta\_lam = f(lambda), \ lambda = rl \ / \ rk\_nom;$$

and

$$rk\_nom = f(flushing\_stroke)$$

where

eta_zw represents the ignition angle efficiency;
Md_nom represents the nominal value for the engine torque or for the internal combustion engine (100);
Mi_opt represents the optimum engine torque or optimum torque of the internal combustion engine (100);
eta_lam represents the $\lambda$ efficiency;
rl represents the air mass; and
rk_nom represents the nominal value for the fuel mass.

8. Method according to one of Claims 1-4, **characterized in that** - if the internal combustion engine (100) is operating in the stratified mode - before or after the flushing according to step c), at least some of basically a plurality of injection quantities provided during the same multiple injection cycle are no longer carried out (Sd4).

9. Method according to one of Claims 1-8, **characterized in that** the maximum stroke of the nozzle needle according to step c) is set only for in each case one cylinder of the internal combustion engine (100) and also only for a small number of injection processes.

10. Method according to Claim 9, **characterized in that** the execution of step c) is blocked for a predeterminable time period before being enabled again (Se).

11. Computer program for a control unit (130) of an internal combustion engine (100), having program code which carries out the method according to one of Claims 1 - 10 when executed on a computer or microprocessor.

12. Computer program according to Claim 11, **characterized in that** the program code is stored on a computer-readable data carrier.

13. Control unit (130) for actuating an injection valve (120) of an internal combustion engine (100), with the injection valve (120) being designed such that a dosing of the fuel quantity supplied by it into the combustion chambers of the internal combustion engine (100) is possible not only by means of a variation of the injection time but also by means of a variation of the stroke of the nozzle needle of the injection valve (120), **characterized in that**, by means of the control unit (130), the correct functioning of the internal combustion engine (100) is monitored and a sticking-open operating state of the nozzle needle of the injection valve (120), in particular on account of contamination of the nozzle, can be identified in which the nozzle of the injection valve (120) can be closed no further but can still be opened further by the nozzle needle, and in this case a substantially maximum stroke of the nozzle needle can be set by the control unit (130) in order to flush the nozzle with fuel in order to eliminate the contamination.

14. Internal combustion engine (100) having an injection valve (120) for injecting fuel, with the injection valve (120) being designed so as to permit a dosing of the fuel quantity supplied by it into the combustion chambers of the internal combustion engine (100) not only by means of a variation of the injection time but also by means of a variation of the stroke of the nozzle needle of the injection valve (120), **characterized in that** the internal combustion engine (100) is assigned a control unit (130) which monitors the internal combustion engine (100) with regard to correct functioning, by means of which control unit a sticking-open operating state of the nozzle needle of the injection valve (120), in particular on account of contamination of the nozzle, can be identified in which the nozzle of the injection valve (120) can be closed no further but can still be opened further by the nozzle needle, and by means of which control unit a substantially maximum stroke of the nozzle needle can in this case be set in order to flush the nozzle with fuel in order to eliminate the contamination.

**Revendications**

1. Procédé pour faire fonctionner une soupape d'injection d'un moteur à combustion interne (100), dans lequel le dosage de la quantité de carburant en plus de pouvoir être ajusté par une variation de la durée d'injection, peut aussi être ajusté par une variation de la course de l'aiguille de buse de la soupape d'injection (120), comprenant les étapes suivante :

   a) surveillance du fonctionnement conforme (Sa) du moteur à combustion interne (100) ;
   b) reconnaissance d'un état de fonctionnement ouvert avec obstruction de l'aiguille de buse de la soupape d'injection (120), en particulier du fait d'un encrassement, la buse de la soupape d'injection (120) ne pouvant certes plus être fermée davantage par l'aiguille de buse mais pouvant encore être ouverte davantage (Sb) ; et
   c) réalisation d'un rinçage de la buse avec du carburant par ajustement d'une course essentiellement maximale de l'aiguille de buse en vue d'éliminer l'encrassement (Sc).

2. Procédé selon la revendication 1, **caractérisé en ce que** dans l'étape a), un enrichissement du moteur à combustion interne (100) est surveillé (Sa1) et **en ce que** dans l'étape b) l'état de fonctionnement ouvert avec obstruction est reconnu lorsque l'enrichissement est supérieur à une valeur seuil d'enrichissement prédéfinissable, ou lorsque le gradient de l'enrichissement est supérieur à une valeur seuil de gradient d'enrichissement prédéfinissable (Sb1).

3. Procédé selon la revendication 1 ou 2, **caractérisé en ce que** dans l'étape a) - éventuellement en plus - le moteur à combustion interne (100) ou un cylindre individuel du moteur à combustion interne (100) est surveillé en termes de ratés (Sa2) et **en ce que** dans l'étape b), l'état de fonctionnement ouvert avec obstruction est reconnu - éventuellement aussi - si le nombre des ratés constatés dans un cylindre par unité de temps dépasse une valeur seuil de fréquence prédéfinie (Sb2).

4. Procédé selon la revendication 1 ou 2 ou 3, **caractérisé en ce que** dans l'étape a) - éventuellement en plus - la pression dans un accumulateur de carburant (110) associé au moteur à combustion interne (100) est surveillée (Sa3) et **en ce que** dans l'étape b) l'état de fonctionnement ouvert avec obstruction est reconnu - éventuellement aussi - si la pression dans l'accumulateur de carburant (110) chute en dessous d'une valeur seuil de pression prédéfinissable ou si l'allure dans le temps de la pression dans l'accumulateur de carburant (110) s'écarte (Sb3) d'une allure de pression de consigne prédéfinissable de plus de certaines valeurs de tolérance de pression prédéfinissables.

5. Procédé selon l'une quelconque des revendications précédentes, **caractérisé en ce que** pendant la réalisation du rinçage selon l'étape c), la durée de commande ti pendant laquelle la course maximale de l'aiguille de buse est ajustée, est réduite dans une mesure telle que la quantité de carburant injectée par la soupape d'injection (120) dans la chambre de combustion du moteur à combustion interne (100) ne dépasse pas une valeur moyenne de carburant prédéfinie (Sd1).

6. Procédé selon l'une quelconque des revendications 1 à 4, **caractérisé en ce que** pendant la réalisation du rinçage selon l'étape c), un raté de combustion est produit artificiellement au niveau du cylindre dans lequel l'état de fonctionnement de l'aiguille de buse ouvert avec obstruction a été constaté, en retardant l'instant d'allumage pour ce cylindre jusqu'à ce que le mélange air-carburant dans la chambre de combustion ne puisse plus être allumé ou jusqu'à ce que le rendement à haute pression de la combustion soit minimal (Sd2).

7. Procédé selon l'une quelconque des revendications 1 à 4, **caractérisé en ce que** lorsque le moteur à combustion interne (100) fonctionne en mode homogène, pendant le rinçage selon l'étape c), les instants d'allumage sont retardés dans une mesure telle que le rendement de l'angle d'allumage soit adapté conformément à la formule suivante (Sd3) :

```
eta_zw = (Md_soll / Mi_opt) . (1/eta_lam),
```

$$eta\_lam = f(lambda), \quad lambda = rl/rk\_soll ;$$

et

$$rk\_soll = f(course\ de\ rinçage)$$

où

eta_zw est le rendement de l'angle d'allumage
Md_soll est la valeur de consigne pour le coupe moteur ou pour le moteur à combustion interne (100) ;
Mi_opt est le couple moteur optimal ou le couple optimal du moteur à combustion interne (100) ;
eta_lam est le rendement de lambda ;
rl est la masse d'air ; et
rk_soll est la valeur de consigne pour la masse de carburant.

8. Procédé selon l'une quelconque des revendications 1 à 4, **caractérisé en ce que** - lorsque le moteur à combustion interne (100) fonctionne en mode stratifié - avant ou après le rinçage conformément à l'étape c), au moins des quantités individuelles d'injection prévues sur en principe plusieurs quantités d'injection pendant le même cycle d'injection multiple ne sont plus réalisées (Sd4).

9. Procédé selon l'une quelconque des revendications 1 à 8, **caractérisé en ce que** la course maximale de l'aiguille de buse selon l'étape c) n'est ajustée que pour un cylindre respectif du moteur à combustion interne (100) et aussi seulement pour quelques opérations d'injection.

10. Procédé selon la revendication 9, **caractérisé en ce que** la réalisation de l'étape c) est bloquée pendant une période de temps prédéterminable, avant qu'elle ne soit à nouveau libérée (Se).

11. Programme informatique pour un appareil de commande (130) d'un moteur à combustion interne (100) avec un code programme, qui réalise le procédé selon l'une quelconque des revendications 1 à 10 lorsqu'il tourne sur un ordinateur ou un microprocesseur.

12. Programme informatique selon la revendication 11, **caractérisé en ce que** le code programme est mémorisé sur un support de données lisible par un ordinateur.

13. Appareil de commande (130) pour la commande d'une soupape d'injection (120) d'un moteur à combustion interne (100), la soupape d'injection (120) étant réalisée de telle sorte qu'un dosage de la quantité de carburant qui est acheminée par elle soit possible dans la chambre de combustion du moteur à combustion interne (100) en plus d'une variation de la période d'injection, par une variation de la course de l'aiguille de buse de la soupape d'injection (120), **caractérisé en ce que** l'on peut surveiller à l'aide de l'appareil de commande (130), le fonctionnement conforme du moteur à combustion interne (100) et l'on peut reconnaître un état de fonctionnement ouvert avec obstruction de l'aiguille de buse de la soupape d'injection (120), en particulier du fait d'un encrassement de la buse, la buse de la soupape d'injection (120) ne pouvant certes plus être fermée par l'aiguille de buse mais pouvant encore être ouverte davantage, et dans ce cas une course essentiellement maximale de l'aiguille de buse pouvant être ajustée par l'appareil de commande (130) pour rincer la buse avec du carburant pour éliminer l'encrassement.

14. Moteur à combustion interne (100) comprenant une soupape d'injection (120) pour l'injection de carburant, la soupape d'injection (120) étant réalisée de telle sorte qu'elle permette un dosage de la quantité de carburant acheminée par elle dans les chambres de combustion du moteur à combustion interne (100) en plus d'une variation de la période d'injection, par une variation de la course de l'aiguille de buse de la soupape d'injection (120), **caractérisé en ce que** le moteur à combustion interne (100) est associé à un appareil de commande (130) qui surveille le fonctionnement conforme du moteur à combustion interne (100) et à l'aide duquel un état de fonctionnement ouvert avec obstruction de l'aiguille de buse de la soupape d'injection (120), en particulier du fait d'un encrassement, peut être reconnu, la buse de la soupape d'injection (120) ne pouvant certes plus être fermée par l'aiguille de buse mais pouvant encore être ouverte davantage, et à l'aide duquel, dans ce cas, une course essentiellement maximale de l'aiguille de buse peut être ajustée pour rincer la buse avec du carburant pour éliminer l'encrassement.

Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10123218 A1
- FR 2762358 A